(19) Europäisches Patentamt

European Patent Office

Office européen des brevets

(11) Veröffentlichungsnummer: **0 461 396 A1**

# (12) EUROPÄISCHE PATENTANMELDUNG

(21) Anmeldenummer: 91107591.9

(22) Anmeldetag: **10.05.91**

(51) Int. Cl.⁵: **H01M 2/34**, H01M 2/30, H01R 13/453

(30) Priorität: **02.06.90 DE 9006295 U**

(43) Veröffentlichungstag der Anmeldung:
**18.12.91 Patentblatt 91/51**

(84) Benannte Vertragsstaaten:
**CH DE FR GB IT LI**

(71) Anmelder: **ROBERT BOSCH GmbH**
**Postfach 10 60 50**
**W-7000 Stuttgart 10(DE)**

(72) Erfinder: **Faelchle, Jörg**
**Florianstrasse 2**
**W-7445 Bempfingen(DE)**

(54) **Akkumulator für eletrische Handwerkzeugmaschinen.**

㊼ Bei Akkumulatoren für Elektrowerkzeuge mit offenen Kontaktanschlußflächen (3) besteht die Gefahr, daß es insbesondere bei längerer oder unsachgemäßer Lagerung zu unerwünschten Entladungen kommt. Außerdem sind die Kontaktflächen den Einflüssen der Luftverschmutzung ungehindert ausgesetzt, was zu Korrusionserscheinungen führen kann. Daher sind die Kontaktflächen (3) erfindungsgemäß bei Nichtgebrauch des Akkumulators (1) mit mindestens einer Klappe (4) abdeckbar, die in ihrer abdeckenden Stellung rastbar ist.

EP 0 461 396 A1

## Stand der Technik

Die Erfindung geht aus von einem Akkumulator nach der Gattung des Anspruchs 1. Derartige Akkumulatoren finden beispielsweise bei Bohrhämmern gemäß der DE-A-35 02 449 Verwendung. Manche Anwender betreiben dieses Gerät mit mehreren Akkumulatoren, wobei sie sich jeweils einen voll aufgeladenen Akku in Reserve halten. Bei längerer oder unsachgemäßer Lagerung kann es dabei zu unerwünschten Entladungen kommen. Außerdem sind die Kontaktflächen den Einflüssen der Luftverschmutzung ungehindert ausgesetzt, was zu Korrossionserscheinungen führen kann.

## Vorteile der Erfindung

Der erfindungsgemäße Akkumulator mit dem kennzeichnenden Merkmal des Anspruchs 1 hat demgegenüber den Vorteil, daß die unter Spannung stehenden Kontaktflächen vor unbeabsichtiger Entladung, insbesondere auch Kurzschluß und Korrossionseinflüssen der Umwelt geschützt sind.

Durch die in den abhängigen Ansprüchen aufgeführten Maßnahmen sind vorteilhafte Weiterbildungen und Verbesserungen des im Anspruch 1 angegebenen Akkumulators möglich. Besonders vorteilhaft ist es, die Kontaktflächen gemäß Anspruch 2 nebeneinander anzuordnen, da dann zur Abdeckung eine einzige Klappe ausreicht. Eine längsverschiebliche Klappe gemäß Anspruch 3 hat den Vorteil, daß der Schieber beim Einsetzen des Akkumulators in das Gerät automatisch zur Seite geschoben wird. Eine um ein Scharnier drehbare Klappe gemäß Anspruch 4 hat den Vorteil, daß diese gegen Staubeinwirkung wesentlich unempfindlicher ist als ein Schieber. Ein federndes Scharnierteil gemäß Anspruch 5 hat den Vorteil, daß dadurch das Einrasten der Klappe in eine Rastverbindung erleichtert wird und eine bestimmte Winkelstellung der geöffneten Klappe hervorgerufen werden kann. Die Merkmale der weiteren Ansprüche dienen der Bedienungsfreundlichkeit und der Fertigungsvereinfachung.

## Zeichnung

Ein Ausführungsbeispiel der Erfindung ist in der Zeichnung dargestellt und in der nachfolgenden Beschreibung näher erläutert. Figur 1 zeigt eine perspektivische Ansicht eines Akkumulatorgehäuses, Figur 2 zeigt einen Querschnitt durch den Anschlußbereich des Akkumulators und Figur 3 zeigt in vergrößerter Darstellung eine Klappe in ihrem Scharnierbereich.

## Beschreibung des Ausführungsbeispiels

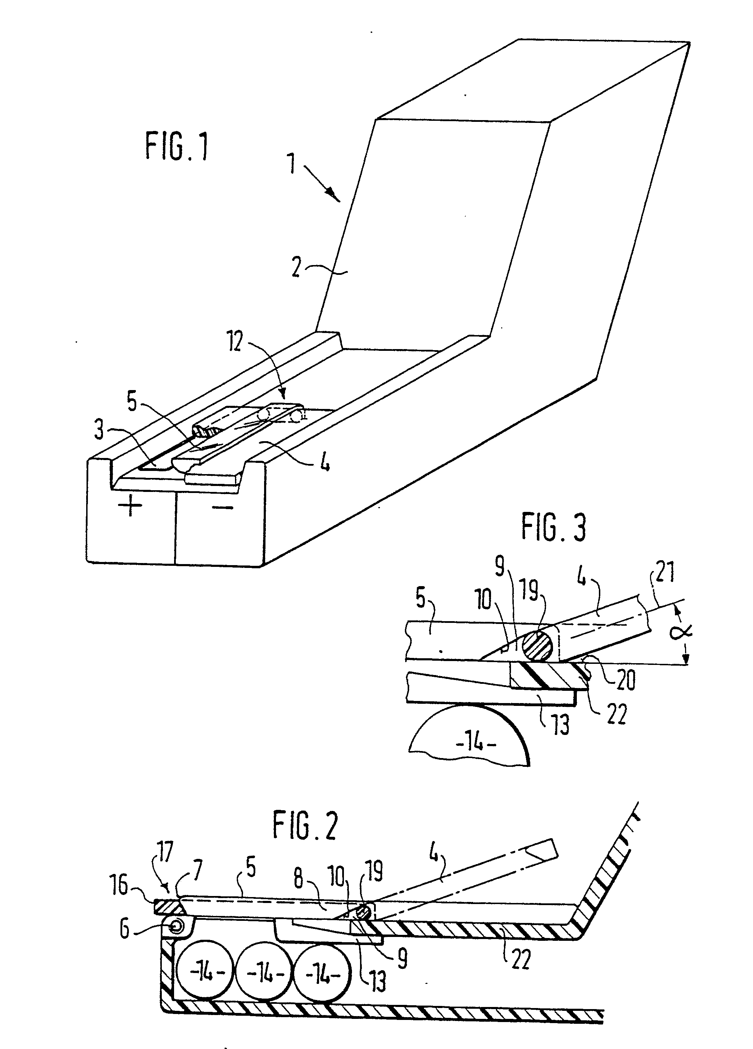

Ein Akkumulator 1 hat ein Akkumulatorengehäuse 2, an dessen Außenseite nebeneinanderliegend zwei elektrische Kontaktflächen 3 zum Anschluß an eine Handwerkzeugmaschine angeordnet sind. In Figur 1 ist nur eine der Kontaktflächen 3, nämlich der Pluspol sichtbar. In diesem Bereich ist eine die Kontaktflächen 3 abdeckende Klappe 4 teilweise ausgebrochen gezeichnet. Die Kontaktfläche 3 für den Minuspol ist in gleicher Weise wie die für den Pluspol am Gehäuse 2 angeordnet und wird von der Klappe 4 verdeckt. Zwischen den beiden Kontaktflächen 3 befindet sich ein mit dem Gehäuse 2 verbundener hervorstehender Steg 5. Der Steg 5 trägt an einem Ende eine Öse 6 über die er mit dem Gehäuse 2 verschraubt ist. Die aus dem Gehäuse hervorstehende Vorderkante dieser Seite weist eine Rastnase 7 auf. Das gegenüberliegende hintere Ende 8 des Steges 5 weist einen Durchbruch 9 auf. Der Durchbruch verläuft nach vorne hin in einer abgeschrägten Wandung 10 aus und bildet den Teil eines Scharniers 12. Etwa in der Mitte des Steges 5 ist an seiner Unterseite ein einstückig verbundener Haltebügel 13 angebracht, der in das Gehäuse 2 eingreift. Über den Haltebügel 13 wird das Ende 8 des Steges 5 federnd in Anlage an das Gehäuse 2 gehalten. Unterhalb des Haltebügels 13 sind in Figur 2 einige in dem Gehäuse 2 untergebrachte Akkumulatorzellen 14 angedeutet, die mit den Kontaktflächen 3 in elektrischer Verbindung stehen.

Die Klappe 4 ist als ebene Platte, vorzugsweise aus Kunststoff ausgebildet, die mittig einen Schlitz von der Breite des Steges 5 aufweist. Der Schlitz wird vorne durch einen Verbindungssteg 16 abgeschlossen, der als Teil einer Rastverbindung 17 in die Nase 7 des Steges 5 einrastbar ist. Hinten wird der Schlitz der Klappe 4 durch einen Scharnierstift 19 begrenzt, der durch den Durchbruch 9 des Steges 5 geführt ist. Der Scharnierstift 19 hat vorzugsweise einen runden Querschnitt. Im Bereich des Scharniers 12 weist die Klappe 4 eine Auflagefläche 20 auf, die unter einem Winkel von ca. 20 Grad zur Längsmittelebene 21 der Klappe 4 ausgerichtet ist. In aufgeklapptem Zustand liegt die Auflagefläche 20 an der Wand 22 des Gehäuses 2 an und führt dazu, daß die Klappe 4 unter einem Winkel von etwa 20 Grad von der Wand 22 absteht.

Nach der Entnahme des Akkumulators 1 aus der Handwerkzeugmaschine oder aus dem Ladegerät steht die Klappe 4 gemäß der gestrichelten Darstellung in Figur 2 um ca. 20 Grad vom Gehäuse 2 ab. Der Winkel kann auch größer oder kleiner sein; die Klappenstellung soll das Ergreifen der Klappe erleichtern und dem Benutzer signalisieren, daß die Klappe 4 noch geschlossen werden muß. Zur Lagerung des Akkumulators 1 wird dann die Klappe 4 um das Scharnier 19 geschwenkt und gegen die Kontaktflächen 4 gedrückt bis die Nase 7 und der Verbindungssteg 16 ineinander einrasten. Beim überrasten wird die Klappe 4 etwas nach vorne gezogen, so daß der Scharnierstift 19 entlang der Wandung 10 nach vorne rutscht und den Steg 5 vom Gehäuse 2 etwas abhebt. Nach dem Einrasten federt der Steg 5 aufgrund der Spannung zwischen seinem Ende 8 und dem Haltebügel 13 wieder auf das Gehäuse 2 bzw. die Gehäusewand 22 zurück.

Vor dem Einsetzen in eine Handwerkzeugmaschine wird die Klappe 4 wieder ausgerastet und zur Gehäusewand 22 hin umgelegt. Sie bleibt dann in der in Figur 2 gestrichelt dargestellten Öffnungsstellung stehen. Beim Einschieben des Akkumulators 1 in eine Handwerkzeugmaschine wird die Klappe automatisch vollends umgeklappt, bis sie an der Gehäusewand 22 anliegt. Um den Benutzer an das Schließen der Klappe bei Nichtgebrauch des Akkumulators 1 zu erinnern, kann die bei geöffneter Klappe sichtbare Seite zum Beispiel mit gelber Farbe oder in sonst auffälliger Weise markiert werden.

Die Erfindung beschränkt sich nicht auf das dargestellte Ausführungsbeispiel. So kann die Federwirkung des Scharniers 12 auch dadurch erreicht werden, daß die Klappe 4 als Ganzes elastisch ist oder der Scharnierstift 19 oder der Verbindungssteg 16 der Klappe 4 federnd nachgibt. Die gleiche Wirkung wie durch die Auflagefläche 20 kann auch dadurch erzielt werden, daß der Scharnierstift 19 einseitig eine Abflachung aufweist. Die Abflachung erstreckt sich in der Öffnungsstellung der Klappe 4 parallel zu der Wandung 10 des Steges 5. Aufgrund der Federwirkung des Endes 8 bzw. des Haltebügels 13 wird die Abflachung gegen die Wandung 10 gedrückt und bewirkt dadurch die Winkelstellung der Klappe 4.

## Patentansprüche

1. Akkumulator (1) für eine elektrische Handwerkzeugmaschine mit mindestens zwei Kontaktflächen (3) als stromführende Verbindung zu der Handwerkzeugmaschine, dadurch gekennzeichnet, daß die Kontaktflächen (3) bei Nichtgebrauch des Akkumulators (1) mit mindestens einer Klappe (4) abdeckbar sind, die in ihrer abdeckenden Stellung rastbar ist.

2. Akkumulator nach Anspruch 1, dadurch gekennzeichnet, daß die Kontaktflächen (3) nebeneinander angeordnet sind.

3. Akkumulator nach Anspruch 1 oder 2, dadurch gekennzeichnet, daß die Klappe (4) längsverschieblich ist.

4. Akkumulator nach Anspruch 1 oder 2, dadurch gekennzeichnet, daß die Klappe (4) um ein Scharnier (12) drehbar ist.

5. Akkumulator nach Anspruch 4, dadurch gekennzeichnet, daß eines der Scharnierteile (4, 5, 16, 19) federnd ausgebildet ist.

6. Akkumulator nach Anspruch 5, dadurch gekennzeichnet, daß das federnde Scharnierteil als im Bereich des Scharniers federnd ausgebilder Steg (5) ausgeführt ist und einen Durchbruch (9) mit abgeschrägter Wandung (10) aufweist, der von einem an der Klappe (4) angeordneten Scharnierstift (19) durchgriffen wird.

7. Akkumulator nach einem der vorhergehenden Ansprüche 1 bis 4, dadurch gekennzeichnet, daß die Klappe (4) zumindest im Bereich der Rastverbindung (17) selbst elastisch ist.

8. Akkumulator nach Anspruch 5, dadurch gekennzeichnet, daß die Klappe (4) im Bereich ihres Scharniers (12) eine Auflagefläche (20) aufweist, die in abgewinkelter Öffnungsstellung der Klappe (4) an der Gehäusewand (22) des Akkumulators (1) anliegt.

9. Akkumulator nach Anspruch 6, dadurch gekennzeichnet, daß der Scharnierstift (19) einen unrunden Querschnitt mit einer Abflachung aufweist, die in abgewinkelter Öffnungsstellung der Klappe (4) an der abgeschrägten Wandung (10) anliegt.

FIG.1

FIG.3

FIG.2

| EINSCHLÄGIGE DOKUMENTE | | | EP 91107591.9 |
|---|---|---|---|
| **Kategorie** | **Kennzeichnung des Dokuments mit Angabe, soweit erforderlich, der maßgeblichen Teile** | **Betrifft Anspruch** | **KLASSIFIKATION DER ANMELDUNG (Int. Cl.⁵)** |
| Y | DE - A1 - 3 105 667 (NOACK) * Zusammenfassung * -- | 1 | H 01 M 2/34 H 01 M 2/30 H 01 R 13/453 |
| Y | EP - A1 - 0 232 792 (DYNAMIT NOBEL) * Ansprüche 2,3,4; Fig. 1,4 * -- | 1 | |
| D,A | DE - A1 - 3 502 449 (BOSCH) * Fig. 1 * ---- | 1 | |

**RECHERCHIERTE SACHGEBIETE (Int. Cl.⁵)**

H 01 M
H 01 R
B 28 D

Der vorliegende Recherchenbericht wurde für alle Patentansprüche erstellt.

| Recherchenort | Abschlußdatum der Recherche | Prüfer |
|---|---|---|
| WIEN | 04-09-1991 | LUX |

KATEGORIE DER GENANNTEN DOKUMENTEN
X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
    nach dem Anmeldedatum veröffentlicht worden ist
D : in der Anmeldung angeführtes Dokument
L : aus andern Gründen angeführtes Dokument

& : Mitglied der gleichen Patentfamilie, überein-
    stimmendes Dokument

EPA Form 1503 03 82